(19)

**Europäisches Patentamt**
**European Patent Office**
**Office européen des brevets**

(11) **EP 4 214 094 B1**

(12) **EUROPEAN PATENT SPECIFICATION**

(45) Date of publication and mention
of the grant of the patent:
**14.05.2025 Bulletin 2025/20**

(21) Application number: **21762321.4**

(22) Date of filing: **06.09.2021**

(51) International Patent Classification (IPC):
**B60R 11/02** *(2006.01)*      **B60R 21/231** *(2011.01)*
**B60R 21/203** *(2006.01)*      **B60R 21/205** *(2011.01)*

(52) Cooperative Patent Classification (CPC):
**B60R 21/231; B60R 21/205;** B60R 2021/23382

(86) International application number:
**PCT/CN2021/116607**

(87) International publication number:
**WO 2022/057648 (24.03.2022 Gazette 2022/12)**

(54) **AIRBAG AND ARRANGEMENT FOR VEHICLE**

AIRBAG UND ANORDNUNG FÜR FAHRZEUG

COUSSIN GONFLABLE ET DISPOSITIF POUR VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2020   CN 202010986299**

(43) Date of publication of application:
**26.07.2023   Bulletin 2023/30**

(73) Proprietor: **Yanfeng International Automotive
Technology Co., Ltd.
Shanghai 201306 (CN)**

(72) Inventors:
• **QI, Jihao**
  **Shanghai 201315 (CN)**
• **YUAN, Ming**
  **Shanghai 201315 (CN)**

• **CHEN, Zhiyuan**
  **Shanghai 201315 (CN)**
• **JIN, Xinxuan**
  **Shanghai 201315 (CN)**
• **LIU, Jun**
  **Shanghai 201315 (CN)**

(74) Representative: **Colombo, Stefano Paolo et al
Marchi & Partners S.r.l.
Via Vittor Pisani, 13
20124 Milano (IT)**

(56) References cited:
**WO-A1-2014/109162      DE-A1- 102004 040 409
DE-A1- 102006 051 218      DE-A1- 102016 219 071
FR-A1- 3 056 504            JP-A- 2007 131 056
JP-A- H0 769 149            US-A1- 2011 260 431**

## Description

TECHNICAL FIELD

The disclosure relates to the field of safety technology, and specifically to an airbag, especially an airbag for a vehicle, and an arrangement for a vehicle.

BACKGROUND OF INVENTION

In modern vehicles, airbags are widely applied as safety means when a vehicle is subjected to an emergency such as a collision or rollover, wherein a cushion of an airbag can be filled with gas, inflated and deployed in a short time. The cushion can generate a high impact during inflation and deployment. Typically, for the safety of an occupant of the vehicle, no protruding object can be provided in front of and above the airbag in an ejection direction in the vicinity of the airbag to prevent the inflating airbag from impacting this object and thus a safety risk.

Typically, for a front passenger airbag of a vehicle, it may be mounted in an instrument panel in front of a front passenger seat as viewed in a driving direction of a vehicle. For example, it may be mounted above a glove compartment of the instrument panel and below a design surface of the instrument panel.

With the development of the vehicle technology, more and more functions tend to be integrated in an electronic screen. For example, a central control screen for an instrument panel may be substantively mounted in a transverse intermediate portion of the instrument panel, and it's convenient for operation and view by a driver. With the trend of electric vehicles and smart driving in the future, the central control screen may become larger and larger, in order to demonstrate high technology and provide entertainment atmosphere, and meanwhile in order to satisfy the user's needs on the operation of the electronic screen. For example, the central control screen in a floating form may be higher than the design surface of the instrument panel, and may extend to a front passenger side as much as possible. Such a central control screen may not only facilitate the driver, but also provide entertainment facilities or other assistances to the front passenger.

In the prior art, it is usually necessary to avoid that a central control screen extends into an effective scope of a front passenger airbag in the design of the central control screen. In other words, due to the presence of the front passenger airbag, a width of the center control screen may be limited, and typically the central control screen can't extend over a boundary of the front passenger airbag, in order to prevent the front passenger airbag from impacting the central control screen during ignition and deployment. For example, when a penetrating screen is applied, the airbag might impact the floating screen, thereby causing splashes and injury to an occupant, or the airbag can't be deployed smoothly, so that no suitable protection is achieved.

The German patent application DE102016219071A1 has disclosed an airbag comprising a guide device for a cushion, wherein the guide device is configured as a ramp underneath the inflated cushion.

SUMMARY OF INVENTION

It is an object of the disclosure to provide an airbag and an arrangement for a vehicle comprising the airbag, wherein the airbag may have improved safety performance.

According to a first independent aspect of the disclosure, an airbag is provided, which comprises a cushion having a neck and a body portion and can be filled with gas from the neck, wherein the cushion is configured to form an accommodation space between the neck and the body portion in an inflated and deployed state of the cushion, wherein the accommodation space passes through the cushion transversely in the inflated and deployed state of the cushion, in particular wherein the accommodation space passes through the cushion in a horizontal direction transverse to an ejection direction of the cushion.

In some embodiments, during inflation and deployment of the cushion starting from a folded state of the cushion, the body portion can at least cross over an imaginary line that extends in the horizontal direction at a predetermined height in the accommodation space.

In some embodiments, the lowest apex of the accommodation space may have a distance of no more than 50 mm, for example no more than 40 mm, 30 mm, 20 mm, or 10 mm from the imaginary line.

In some embodiments, during inflation and deployment of the cushion starting from the folded state of the cushion, the body portion can at least cross over the lowest apex of the accommodation space.

In some embodiments, the cushion may be configured such that, during inflation and deployment of the cushion starting from the folded state of the cushion, the body portion can cross over a half of the accommodation space below the neck.

In some embodiments, in the inflated and deployed state of the cushion, the neck has a circular or elliptical cross-section, or a curved quadrilateral cross-section.

According to a second embodiment, an airbag is provided, which comprises a cushion provided with a flexible pulling element in a predetermined area, wherein the pulling element is configured to restrain a cross-sectional shape of the cushion in the predetermined area in an inflated and deployed state of the airbag. By way of such restrain, a collision of the cushion with a protruding object during inflation and deployment may be at least reduced, and in particular avoided.

In some embodiments, the second aspect may be combined with the first aspect.

In some embodiments, in an end area of the neck adjacent to the body portion, the flexible pulling element may be provided inside the neck, such that the pulling element may be configured to restrain a cross-sectional shape of the neck in the inflated and deployed state of the cushion.

In some embodiments, the pulling element may be a pulling strap configured to be straightened in the inflated and deployed state of the cushion.

In some embodiments, in the inflated and deployed state of the cushion, the pulling strap may extend in a vertical plane in the neck and may be arranged in the neck centrally in the horizontal direction.

According to a third embodiment, an airbag is provided, which comprises a cushion, and further comprises a guide device configured to guide the cushion during inflation and deployment of the cushion.

In some embodiments, the third embodiment may be combined with the first aspect and the second embodiment.

In some embodiments, the guide device may be flexibly foldable, such that the folded cushion is accommodated in the folded guide device, wherein the guide device can be transformed from a folded state to a deployed state in which the guide device forms a guide sleeve.

In some embodiments, the guide sleeve may have a course consistent to that of the neck in the inflated and deployed state.

In some embodiments, the guide sleeve may be fitted on the neck in the inflated and deployed state of the cushion.

In some embodiments, the guide device may include at least one Z-fold.

It is possible that the cushion may form an accordion-like structure by multiple Z-folds, which may realize a controllable deployment trajectory of the cushion, so that the cushion can jump over a protruding object such as a floating central control screen in an initial stage of deployment.

In some embodiments, the guide device may be formed of a sheet that is folded in half and then is sewed on both sides into a cylindrical body.

In some embodiments, the guide device may be formed of two sheets, wherein one of the sheets is sewed on its longitudinal edges to form a cylindrical body that is open at two ends, and the other sheet is sewed with the cylindrical body to form a bottom of the cylindrical body at one of the ends of the cylindrical body.

In some embodiments, the guide device may be formed of two lateral sheets and one intermediate main sheet, wherein the two lateral sheets are sewed with respective one side edge of the intermediate main sheet to form a cylindrical body, and each lateral sheet forms one side portion of the cylindrical body, and the intermediate main sheet forms the other two opposite side portions and a bottom of the cylindrical body.

In some embodiments, pulling straps are respectively provided on inner sides of the two side portions formed by the intermediate main sheet.

According to a fourth embodiment, an airbag is provided, which comprises a cushion having at least multiple Z-folds in a folded state.

In some embodiments, the fourth aspect may be combined with at least one of the aforementioned three aspects.

In some embodiments, the cushion may have the multiple Z-folds at least in the neck in the folded state.

In some embodiments, the cushion may have the multiple Z-folds in the neck and at least in a section of the body portion adjacent to the neck in the folded state.

In some embodiments, the cushion in the folded state may include only the Z-folds, or the cushion may be folded in a rolled manner in a section of the body portion facing away from the neck.

It is possible that with the guide device, the cushion can be moved in the guide device according to a specific trajectory in an initial stage of deployment starting from the folded state, so as to guide the deploying cushion in the form of a fold pack and prevent the cushion from impacting with a protruding object such as a floating central control screen during inflation and deployment.

In some embodiments, a ratio of a length to an equivalent radius of the neck is greater than or equal to 2, for example, greater than or equal to 3, 4, 5, or 6.

The disclosure also includes an arrangement for a vehicle, wherein the arrangement comprises a vehicle member and further comprises an airbag according to any one of the embodiments of the disclosure that is mounted to the vehicle member.

In some embodiments, an object is provided on the vehicle member in front of the cushion in an ejection direction of the cushion, wherein the object is located in the accommodation space formed by the cushion in the inflated and deployed state of the cushion. Moreover, during inflation and deployment of the cushion starting from the folded state of the cushion, the body portion of the cushion crosses over the object.

In some embodiments, the airbag may be a front passenger airbag.

In some embodiments, the vehicle member may be an instrument panel, and the object may be a display screen arranged on the instrument panel and protruding upward from the instrument panel.

In some embodiments, the display screen may be a floating central control screen.

In some embodiments, the airbag may include a pulling strap for restraining a cross-sectional shape of the neck of the cushion in the inflated and deployed state of the cushion, wherein the pulling strap may be perpendicular to a windshield and/or coplanar with the central control panel in the inflated and deployed state of the cushion.

In some embodiments, it is possible to mount a floating central control screen in front of the front passenger airbag in an ejection direction (or to say behind it in a vehicle coordinate system), wherein the cushion may jump over the central control screen after ignition of the airbag so as to avoid breaking the screen, and the cushion may also provide normal protection for an occupant sitting in the front passenger seat after inflation and deployment of the cushion. In this way, it is possible to provide vehicle manufacturers with new possibilities when designing the interior trims and instrument panels, which may significantly enhance the sense of technology of the vehicle and the entertainment of the occupants.

The vehicle may be a passenger vehicle or a truck, and in particular an automated driving vehicle, such as an autonomous driving vehicle.

## BRIEF DESCRIPTION OF THE ACCOMPANYING DRAWINGS

The invention will be described below in more detail by way of the embodiments with reference to the accompanying drawings, however, the invention isn't limited to these specific embodiments.

Fig. 1 is a schematic view of an airbag in an inflated and deployed state according to an embodiment of the invention.
Figs. 2 and 3 are schematic views of materials for manufacturing a cushion of the airbag.
Fig. 4 is a schematic view of an airbag in an inflated and deployed state according to a second embodiment of the invention.
Figs. 5 and 6 are schematic views of an airbag during inflation and deployment and in an inflated and deployed state according to a third embodiment of the present invention.
Fig. 7 is a schematic view of a cushion and a guide device of the airbag in a folded state according to the third embodiment.
Figs. 8 to 10 are respective schematic views of embodiments for manufacturing a guide device.
Fig. 11 is a schematic view of a variant to the guide device according to the embodiment of Fig. 10.
Figs. 12 to 14 are schematic views of an airbag according to a fourth embodiment of the invention.
Fig. 15 is an exploded view of an airbag as a module.

## EMBODIMENTS

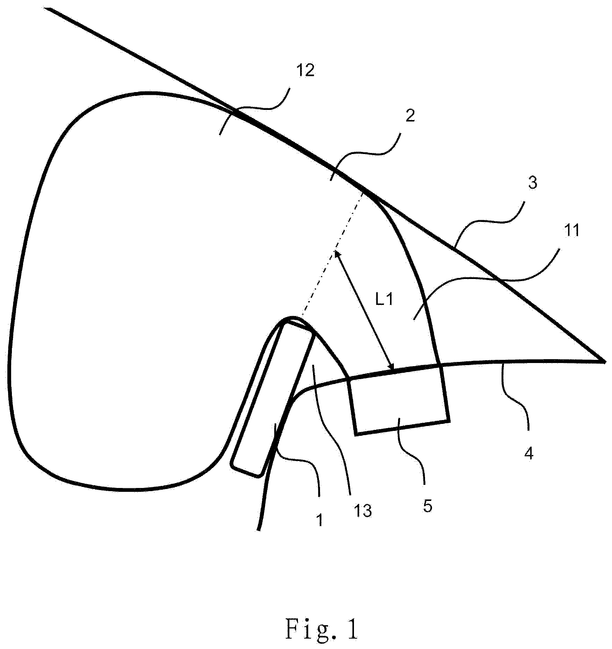

Fig. 1 is a schematic view of an airbag 5 in an inflated and deployed state according to an embodiment of the present invention, wherein a cross-section is defined by a central ignition point and an ejection direction of the airbag. The cross-section may be a vertical plane substantially parallel to a longitudinal direction of a vehicle. The airbag 5 shown in Fig. 1 is configured as a front passenger airbag. For example, the airbag 5 may also be configured as a driver airbag or a side airbag.

The vehicle may have a windshield 3 and an instrument panel 4. A central control screen 1 may be arranged on the instrument panel 4. The central control screen 1 may protrude upward from a design surface of the instrument panel 4, for example in the form of a floating screen. In a width direction of the vehicle, or to say in a horizontal direction transverse to the ejection direction of the front passenger airbag, the central control panel 1 may extend into an effective scope of the front passenger airbag. Typically, according to the level of knowledge in the prior art, the central control screen 1 protruding from the design surface of the instrument panel 4 can't extend into the effective scope of the front passenger airbag, to avoid a collision of the front passenger airbag with the central control screen 1 during its ejection and thus an associated safety risk. For example, the central control screen 1 might be broken or the cushion 2 might not be deployed as planned, so that it can't provide a proper safety protection for an occupant sitting in a front passenger seat. The instrument panel 4 may have an installation space below its design surface for accommodating the airbag 5 as an installation module.

The airbag 5 may include a housing, the cushion 2 and an inflator, wherein the inflator may be mounted to the housing or connected with the housing. The cushion 2 may be accommodated in the housing in a folded state, and may be inflated and deployed until the state shown in Fig. 1, when it's filled with gas by the inflator. Typically, the inflator may be a pyrotechnic gas generator, which is fixedly and centrally mounted in a bottom of the housing of the airbag.

The cushion 2 may have a neck 11 and a body portion 12. In the inflated and deployed state of the cushion 2, an accommodation space 13 may be formed between the neck 11 and the body portion 12, wherein the accommodation space 13 passes through the cushion 2 in the horizontal direction transverse to the ejection direction of the cushion 2 (in a transverse direction of the vehicle in the embodiment shown in Fig. 1). As shown in the cross-sectional view in Fig. 1, the central control panel 1 may be at least partially accommodated in the accommodation space 13. In the above-mentioned horizontal direction (for example, in the transverse direction of the vehicle), the central control panel 1 may occupy a part of the width of the accommodating space 13 or may pass through the entire accommodating space 13.

According to the invention, during inflation and deployment of the cushion 2 starting from the folded state of the cushion 2, the body portion 12 can at least cross over an imaginary line extending in the horizontal direction (in the width direction of the vehicle) at a predetermined height in the accommodation space 13. The imaginary line may, for example, have a distance of less than 50 mm, for example 10 mm to 40 mm, such as 20 mm to 30 mm, from the lowest vertex of the accommodation space 13. It's advantageous that, during inflation and deployment of the cushion 2 starting from the folded state of the cushion 2, the body portion 12 can at least cross over the lowest apex of the accommodation space 13. It is particularly advantageous that, during inflation and deployment of the cushion 2 starting from the folded state of the cushion 2, the body portion 12 can cross over a half of the accommodation space 13 below the neck. Therefore, the cushion 2 may not collide with the central control panel 1 during inflation and deployment.

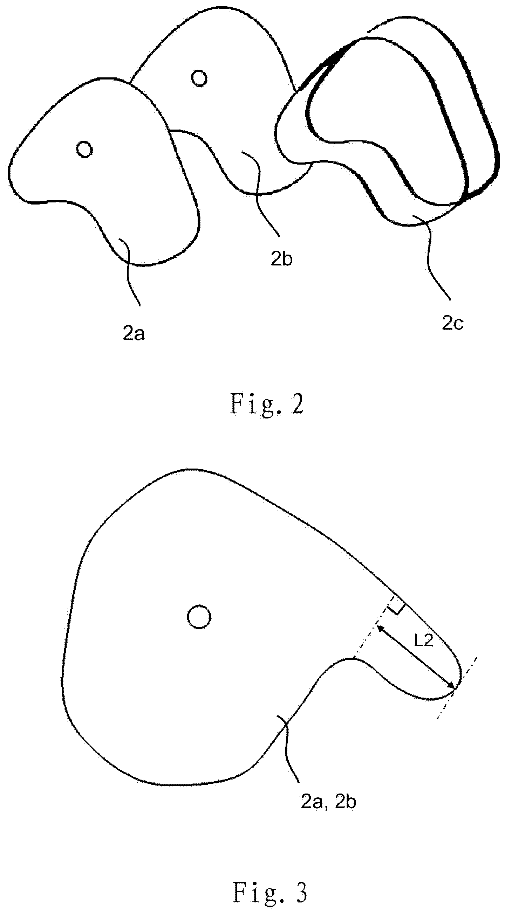

Fig. 2 is a schematic view of three sheets for forming the cushion 2 of Fig. 1. In detail, the cushion 2 may include two lateral sheets 2a, 2b and an intermediate main sheet 2c. The two lateral sheets 2a, 2b may be sewn to respective one of two side edges of the main sheet 2c, and thus form the cushion 2. In some embodiments not shown, the cushion 2 may also be formed of two lateral sheets sewn to each other, wherein each lateral sheet may form a half of the cushion 2.

Fig. 3 is a plan view of a lateral sheet according to an embodiment, wherein the lateral sheet may be used as any one of the lateral sheets 2a, 2b shown in Fig. 2, for example. According to an advantageous embodiment, the lateral sheet may have an elongated portion and a main portion, wherein the length of the elongated portion (the length of the neck 11) L2 may be greater than or equal to the length L1 as shown in Fig. 1. The length L1 may be a distance from the central ignition point to a midpoint of a vertical line from an upper edge of the central control panel 1 to the windshield 3. The central ignition point may be defined as an intersection of a central normal of the airbag 5 as a module and the design surface of the instrument panel 4. The length L2 may be a length of a center line from a root of the lateral sheet to a transition between the elongated portion and the main portion.

In the embodiment shown in Fig. 2, in the inflated and deployed state of the cushion 2, the neck 11 of the cushion 2 may have a substantially rectangular cross-section, for example a curved quadrilateral cross-section. In the case where the cushion is formed of two lateral sheets, the neck of the cushion may have a substantially circular or elliptical cross-section.

It's advantageous that, in the inflated and deployed state of the cushion 2, the length L2 of the neck 11 of the cushion 2 may be at least 2 times, especially at least 3 times, an equivalent radius of the neck. The equivalent radius may be defined according to the following formula:

$$\pi \times R^2 \times L2 = V$$

Where, R represents the equivalent radius of the neck 11, and L2 represents the length of the neck, and V represents the volume of the neck.

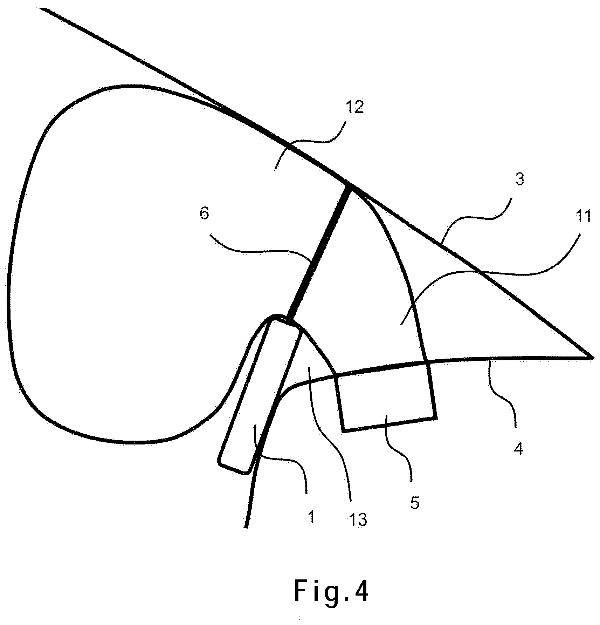

Fig. 4 is a schematic cross-sectional view of an airbag 5 in an inflated and deployed state according to a second embodiment of the present invention. The second embodiment differs from the first embodiment shown in Fig. 1 mainly in that the airbag 5 includes a flexible pulling element 6. The airbag 5 may be the same as or similar to that in the first embodiment in other respects, and therefore, reference may be made to the description of the first embodiment. In an end area of a neck 11 of a cushion 2 adjacent to a body portion 12, the flexible pulling element 6 may be provided inside the neck 11. The pulling element 6 is configured to restrain a cross-sectional shape of the neck 11 in the inflated and deployed state of the cushion 2. In the case where the cushion 2 is formed of two lateral sheets and the area of the neck 11 has a circular or elliptical cross-section, it may be particularly advantageous that the pulling element 6 is arranged in the neck 11.

For example, the pulling element 6 may be a mesh element having a number of joints at its edge, which are connected to a cushion body of the cushion 2 in the area of the neck 11. The mesh element may, for example, have a rectangular shape. For example, the pulling element 6 may also be a cross-shaped element, which has four joints connected to the cushion body of the cushion 2 in an area of the neck 11. In the particularly simple embodiment as shown in Fig. 4, the pulling element 6 may be a pulling strap, which is straightened in the inflated and deployed state of the cushion 2. For example, the pulling strap may extend substantially in a vertical plane in the neck 11 and may be arranged in the neck 11 centrally in a horizontal direction. It's advantageous that the pulling strap may be substantially perpendicular to a windshield 3 and/or substantially coplanar with a central control screen 3 in its straightened state.

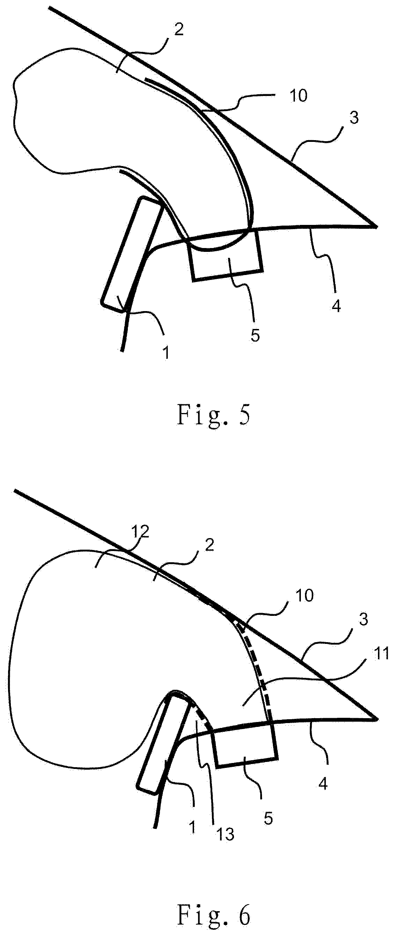

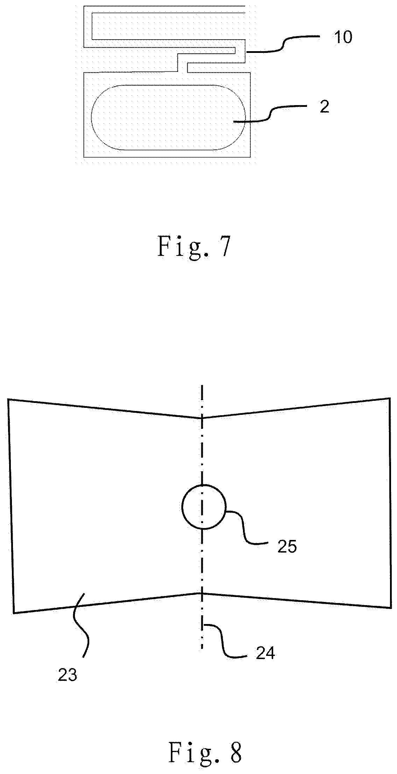

An airbag according to a third embodiment of the present invention will be explained below with reference to Figs. 5 to 7. Fig. 5 is a schematic view of a cushion of the airbag during inflation and deployment, and Fig. 6 is a schematic view of the cushion of the airbag in an inflated and deployed state. wherein a cross-section is defined by a central ignition point and an ejection direction of the airbag. The cross-section may be, for example, a vertical plane parallel to a longitudinal direction of a vehicle. For the sake of clarity, a guide device 10 is illustrated with dashed lines in Fig. 6. Fig. 7 is a schematic view of the flexible guide device 10 in a folded state.

In the third embodiment, the airbag may include the guide device, in particular the flexible guide device 10, which is configured to guide the cushion 2 during inflation and deployment of the airbag. As shown in Fig. 7, the guide device 10 may be flexibly foldable, wherein the folded cushion 2 is accommodated in the folded guide device 10, and the guide device can be transformed from the folded state to a deployed state in which it forms a guide sleeve. The guide device 10 may be, for example, formed of a material that is the same as or similar to the cushion 2. An inner end of the guide device 10 may be fixed to a housing of the airbag 5. First, the folded cushion 2 may be placed inside the guide device 10. Then, the guide device 10 may be folded, for example, it's folded in a Z shape. The airbag 5 together with the guide device 10 may be, for example, mounted as a module in an installation space of an instrument panel 4. For example, more specifically, the cushion 2 may be folded first, and then the folded cushion 2 may be wrapped and filled into the guide device 10 configured as a guide sleeve. Then, the guide device 10 may form a whole wrap by multiple Z-folds, which may in turn be filled into the housing of the airbag 5. For example, the diameter, the length and the shape of the guide device 10 may be designed according to installation positions of the windshield 3, the floating central control screen 1 and the front passenger airbag, so that its opening after deployment may cross over an upper edge of the floating central control screen. Due to the presence of the guide device, an inflation and deployment process of the cushion 2 may be controllable, so that the cushion 2 may not impact the floating central control screen 1 during inflation and deployment.

When an inflator of the airbag 5 is activated, the gas is quickly filled into the cushion 2, and the cushion 2 during inflation and deployment may transform the guide device 10 from the folded state to the inflated state. The guide device 10 may cross over the central control screen 1 in the deployed state, and the cushion 2 guided in the guide device 10 may cross over the central control screen 1 until it reaches the state shown in Fig. 6. It's advantageous that the guide sleeve may have a course consistent with that of the neck 11 of the cushion 2, and the guide sleeve may be fitted on the neck 11 in the inflated and deployed state of the cushion 2. When the cushion 2 is fully filled with gas and thus has been inflated and deployed, the flexible guide device 10 may also restrain the cushion 2 and reduce the compression of the central control screen 1 by the cushion 2.

In some embodiments not shown, the guide device may also not extend to and cross over the central control panel 1 in the deployed state, but an outlet of the guide device is designed in its height and orientation, so that the body portion 12 ejected away from the outlet may cross over the central control screen 1. Generally speaking, the guide device 10 may define an ejection trajectory for the cushion 2, which may ensure that the cushion 2 during inflation and deployment does not collide with a predetermined protruding object.

Figs. 8 to 10 respectively show a schematic view of an embodiment for manufacturing a guide device 10.

As shown in Fig. 8, the guide device 10 may be formed of a tailored sheet 23 having a central hole 25. The sheet 23 may be folded in half along a folding line 24, and then may be sewed on both sides to form a cylindrical body having a bottom at one end and an opening at the other end. The bottom has the central hole 25 for fixing the guide device 10 to the housing of the airbag 5.

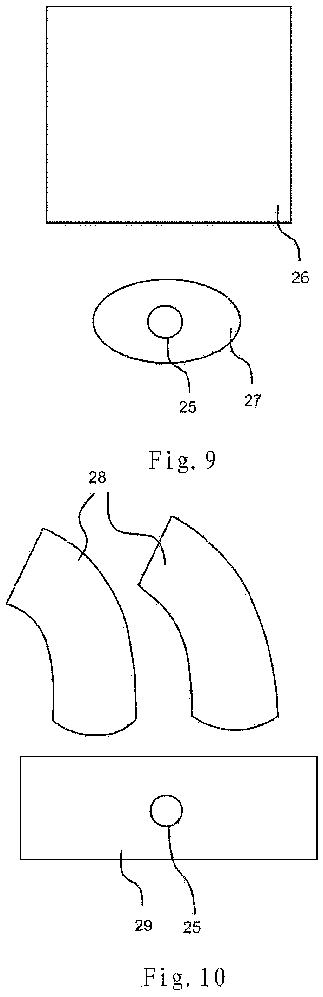

As shown in Fig. 9, the guide device 10 may be formed of two tailored sheets 26, 27, wherein the sheet 26 may be sewn on its two longitudinal edges into a cylindrical body that is open at both ends, and then the sheet 27 may be sewn to one of two ends of the sewed sheet 26, as a bottom having a central hole 25.

As shown in Fig. 10, the guide device 10 may be formed of three tailored sheets, i.e. two lateral sheets 28 and an intermediate main sheet 29. The intermediate main sheet 29 has a central hole 25, which also serves as means for fixing a bottom of a final cylindrical body to a housing of the airbag.

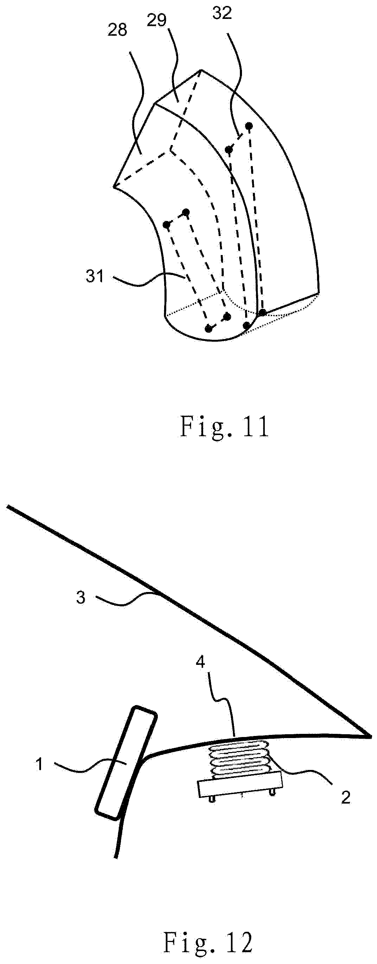

Fig. 11 shows a variant to Fig. 10, wherein pulling straps 31 and 32 are provided on inner sides of a cushion body of the guide device 10, for example, on opposite side portions of the cushion body formed by the intermediate main sheet 29. These pulling straps may facilitate a deployment process of the guide device 10 and the shape stability after deployment.

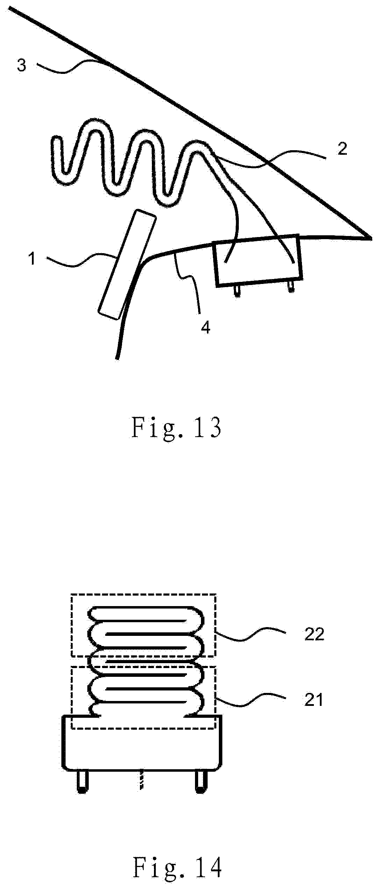

An airbag according to a fourth embodiment of the present invention will be explained below with reference to Figs. 12 to 14. Fig. 12 shows a cushion 2 of the airbag in a folded state, and Fig. 13 shows the cushion 2 of the airbag during inflation and deployment, wherein a cross-section is defined by a central ignition point and an ejection direction of the airbag. Fig. 14 shows a folded form of the cushion 2.

In this embodiment, the cushion 2 is folded, so that the cushion 2 may cross over a central control screen 1 during inflation and deployment, so as to avoid collision of the cushion 2 with the central control screen 1 during inflation and deployment and thus an associated safety risk. The cushion 2 may include multiple Z-folds at least in the neck 11 in the folded state (as indicated by the reference sign 21 in Fig. 14). It's advantageous that the cushion 2 may include multiple Z-folds in the neck 11 and at least in a section of the body portion 12 adjacent to the neck 11 in the folded state. For example, the cushion 2 may include only the Z-folds in the folded state, as shown in Fig. 14. Alternatively, the cushion 2 may also be folded in a rolled manner in a section (as indicated by the reference sign 22 in Fig. 14) of the body portion 12 facing away from the neck 11.

By way of the multiple repeated Z-folds of the cushion 2, an accordion-like structure may be formed. With this structure, it may be achieved that the force condition of the folded cushion may be similar to that of a spring in an initial stage after ignition, so that the folded cushion may jump up quickly during inflation and deployment, thereby may smoothly cross over a protruding object, for example, a floating central control screen 1.

In some embodiments not shown, the airbags according to the above embodiments may also be respectively applied as a front passenger airbag in a situation where no central control screen 1 is provided. When an object is unintentionally placed in an area of an instrument panel in front of a front passenger seat, such an airbag may be beneficial for the safety of the occupants of the vehicle during the ejection of the airbag.

In some embodiments not shown, the airbags according to the above embodiments may also serve as driver airbags. When an autonomously driving smart vehicle isn't equipped with a steering wheel, a driver airbag may be especially designed as the airbag according to any of the above-mentioned embodiments.

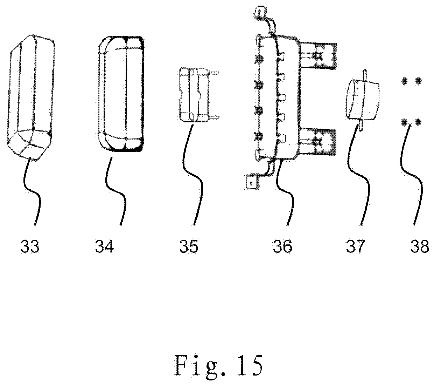

Fig. 15 is an exploded view of an airbag as a module. The above embodiments of the airbags may have the same or similar construction. The airbag as shown in Fig. 15 may include a dust-proof cover 33, a fold pack 34, a retaining ring 35, a housing 36, a gas generator 37, and fasteners 38. The fold pack 34 may be fixed in the housing 36 by the retaining ring 35, and the housing 36 may be fixed in an installation space in the instrument panel by the fasteners 38. The fold pack 34 may include a folded cushion 2 and a flexible guide device 10 that wraps the cushion 2 and is also folded. The cushion 2 and the guide device 10 may be, for example, in a construction that is the same as or similar to those in the aforementioned embodiments. The material of the guide device 10 may be the same or similar to that of the cushion 2, or may be any other flexible and deformable material.

It should be noted that, the terms used here are only for the purpose of explaining specific aspects, not for limiting the disclosure. As used herein, the singular forms "a" and "the" shall include plural forms, unless otherwise specifically stated in the context. It may be understood that the terms "comprising", "including" and other similar terms, when used in the application documents, specifically explain the presence of the stated operations, elements and/or components, but do not exclude the presence or addition of one or more other operations, elements, components, and/or their combinations. The term "and/or" as used herein includes all random combinations of one or more related items as listed. In the description of the accompanying drawings, similar reference signs always indicate similar elements.

The thickness of the elements in the accompanying drawings may be exaggerated for the sake of clarity. In addition, it may be understood that, if one element is referred to as being formed on, coupled to, or connected to another element, then the one element may be directly formed on, coupled to, or connected to another element, or there may be one or more intervening elements among them. On the contrary, if the expressions "directly formed on", "directly coupled to" and "directly connected to" are used here, it means that there are no intervening elements. Other phases intended to explain the relationship between elements should be interpreted similarly, such as "between" and "directly between", "attached" and "directly attached", "adjacent" and "directly adjacent" and so on.

The terms such as "top", "bottom", "above", "below", "over" and "under" herein are intended to describe a relationship of one element, layer or area as shown in the accompanying drawings relative to another component, layer or area. It may be understood that, in addition to the orientations described in the accompanying drawings, these terms should also include other orientations of the device.

It may be understood that, although the terms such as "first", and "second" may be used here to describe different elements, these elements should not be limited by these terms. These terms are only intended to distinguish one element from another element. Therefore, the first element may be referred to as the second element without departing from the teaching of the concept according to the present invention.

It is important to note that the present inventions (e.g. inventive concepts, etc.) have been described in the specification and/or illustrated in the FIGURES of the present patent document according to exemplary embodiments; the embodiments of the present inventions are presented by way of example only and are not intended as a limitation on the scope of the present inventions. The construction and/or arrangement of the elements of the inventive concepts embodied in the present inventions as described in the specification and/or illustrated in the FIGURES is illustrative only. Although exemplary embodiments of the present inventions have been described in detail in the present patent document, a person of ordinary skill in the art will readily appreciate that equivalents, modifications, variations, etc. of the subject matter of the exemplary embodiments and alternative embodiments are possible and contemplated as being within the scope of the present inventions; all such subject matter (e.g. modifications, variations, embodiments, combinations, equivalents, etc.) is intended to be included within the scope of the present invention as defined in the appended claims.

It should also be noted that various/other modifications, variations, substitutions, equivalents, changes, omissions, etc. may be made in the configuration and/or arrangement of the exemplary embodiments (e.g. in concept, design, structure, apparatus, form, assembly, construction, means, function, system, process/-method, steps, sequence of process/method steps, operation, operating conditions, performance, materials, composition, combination, etc.) without departing from the scope of the present inventions; all such subject matter (e.g. modifications, variations, embodiments, combinations, equivalents, etc.) is intended to be included within the scope of the present invention as defined in the appended claims.

The scope of the present inventions is not intended to be limited to the subject matter (e.g. details, structure, functions, materials, acts, steps, sequence, system, result, etc.) described in the specification and/or illustrated in the FIGURES of the present patent document. It is contemplated that the claims of the present patent document will be construed properly to cover the complete scope of the subject matter of the present invention; it is to be understood that the terminology used in the present patent document is for the purpose of providing a description of the subject matter of the exemplary embodiments rather than as a limitation on the scope of the present inventions.

It is also important to note that according to exemplary embodiments the present inventions may comprise conventional technology (e.g. as implemented and/or integrated in exemplary embodiments, modifications, variations, combinations, equivalents, etc.) or may comprise any other applicable technology (present and/or future) with suitability and/or capability to perform the functions and processes/operations described in the specification and/or illustrated in the FIGURES. All such technology (e.g. as implemented in embodiments, modifications, variations, combinations, equivalents, etc.) is considered to be within the scope of the present inventions of the present patent document.

Finally, it is to be noted that, the above-described embodiments are merely intended for understanding the present invention, but do not constitute a limit on the protection scope of the present invention. For those skilled in the art, amendments may be made on the basis of the above-described embodiments, and these amendments do not depart from the protection scope of the present invention as defined in the appended claims.

## Claims

1. An airbag, in particular a front passenger airbag, comprising a cushion (2), wherein the cushion has a neck (11) and a body portion (12), wherein the cushion can be filled with gas from the neck, wherein the cushion is configured such that,

   an accommodation space (13) is formed between the neck and the body portion and passes through the cushion transversely in an inflated and deployed state of the cushion, in particular wherein the accommodation space passes through the cushion in a horizontal direction transverse to an ejection direction of the cushion,

   wherein the airbag comprises a guide device (10) configured to guide the cushion during inflation and deployment of the cushion,

   **characterized in that** the guide device is flexibly foldable, wherein the folded cushion is accommodated in the folded guide device, wherein the guide device can be transformed from a folded state to a deployed state in which the guide device forms a guide sleeve.

2. The airbag according to claim 1, **characterized in that**, during inflation and deployment of the cushion starting from a folded state of the cushion, the body portion can at least cross over an imaginary line, which extends in the horizontal direction at a predetermined height in the accommodation space, preferably wherein the lowest apex of the accommodation space has a distance of no more than 50 mm, in particular no more than 20mm, from the imaginary line.

3. The airbag according to claim 1, **characterized in that** during inflation and deployment of the cushion starting from the folded state of the cushion, the body portion can at least cross over the lowest apex of the accommodation space.

4. The airbag according to any one of claims 1 to 3, **characterized in that** in the inflated and deployed state of the cushion, the neck has a circular or elliptical cross-section, or a curved quadrilateral cross-section.

5. The airbag according to any one of claims 1 to 4, **characterized in that** in an end area of the neck adjacent to the body portion, a flexible pulling element is provided inside the neck (11), wherein the pulling element is configured to restrain a cross-sectional shape of the neck in the inflated and deployed state of the cushion.

6. The airbag according to claim 5, **characterized in that** the pulling element is a pulling strap configured to be straightened in the inflated and deployed state of the cushion.

7. The airbag according to claim 6, **characterized in that** in the inflated and deployed state of the cushion, the pulling strap extends in a vertical plane in the neck and is arranged in the neck centrally in the horizontal direction.

8. The airbag according to any one of claims 1 to 7, **characterized in that** the guide sleeve has a course consistent to that of the neck in the inflated and deployed state.

9. The airbag according to any one of claims 1 to 8, **characterized in that** the guide sleeve is fitted on the neck in the inflated and deployed state of the cushion.

10. The airbag according to any one of claims 1 to 9, **characterized in that** the guide device includes at least one Z-fold.

11. The airbag according to any one of claims 1 to 10, **characterized in that** the guide device is formed of a sheet that is folded in half and then is sewed on both sides into a cylindrical body; or

    that the guide device is formed of two sheets, wherein one of the sheets is sewed on its longitudinal edges to form a cylindrical body that is open at two ends, and the other sheet is sewed with the cylindrical body to form a bottom of the cylindrical body at one of the two ends of the cylindrical body; or

    that the guide device is formed of two lateral sheets and an intermediate main sheet, wherein the lateral sheets are sewed with respective one side edge of the intermediate main sheet to form a cylindrical body, and each lateral sheet forms one side portion of the cylindrical body, and the intermediate main sheet forms the other two opposite side portions and a bottom of the cylindrical body.

12. The airbag according to claim 11, **characterized in that** pulling straps are respectively provided on inner sides of the two side portions formed by the intermediate main sheet.

13. The airbag according to any one of claims 1 to 12, **characterized in that** the cushion in the folded state includes multiple Z-folds at least in the neck, in particular in the neck and at least in a section of the body portion adjacent to the neck.

14. An arrangement for a vehicle, comprising a vehicle member, **characterized in that** the arrangement comprises the airbag according to any one of claims 1 to 13 mounted to the vehicle member.

15. The arrangement for a vehicle according to claim 14, **characterized in that** an object is provided on the vehicle member in front of the cushion in an ejection direction of the cushion, wherein the object is located in the accommodation space formed by the cushion in the inflated and deployed state of the cushion, and the body portion of the cushion crosses over the object during inflation and deployment of the cushion starting from the folded state of the cushion.

16. The arrangement for a vehicle according to claim 14 or 15, **characterized in that** the airbag is a front passenger airbag, the vehicle member is an instrument panel (4), and the object is a display screen, in particular a floating central control screen (1), arranged on the instrument panel and protruding upward from the instrument panel.

**Patentansprüche**

1. Airbag, insbesondere ein Beifahrer-Airbag, umfassend ein Kissen (2), wobei das Kissen einen Hals (11) und einen Körperabschnitt (12) aufweist, wobei das Kissen von dem Hals aus mit Gas gefüllt werden kann, wobei das Kissen so konfiguriert ist, dass

zwischen dem Hals und dem Körperabschnitt ein Aufnahmeraum (13) ausgebildet ist und in einem aufgeblasenen und entfalteten Zustand des Kissens quer durch das Kissen verläuft, insbesondere wobei der Aufnahmeraum durch das Kissen in eine horizontale Richtung quer zu einer Auswurfrichtung des Kissens verläuft, wobei der Airbag eine Führungsvorrichtung (10) umfasst, die dazu konfiguriert ist, das Kissen während des Aufblasens und der Entfaltung des Kissens zu führen, **gekennzeichnet dadurch, dass** die Führungsvorrichtung flexibel faltbar ist, wobei das gefaltete Kissen in der gefalteten Führungsvorrichtung aufgenommen ist, wobei die Führungsvorrichtung von einem gefalteten Zustand in einen entfalteten Zustand umgewandelt werden kann, in dem die Führungsvorrichtung eine Führungshülse ausbildet.

2. Airbag nach Anspruch 1, **gekennzeichnet dadurch, dass** während des Aufblasens und der Entfaltung des Kissens ausgehend von einem gefalteten Zustand des Kissens der Körperabschnitt mindestens eine imaginäre Linie überlagern kann, die sich in horizontaler Richtung in einer vorherbestimmten Höhe in dem Aufnahmeraum erstreckt, wobei bevorzugt der niedrigste Scheitelpunkt des Aufnahmeraums einen Abstand von nicht mehr als 50 mm, insbesondere nicht mehr als 20 mm, von der imaginären Linie aufweist.

3. Airbag nach Anspruch 1, **gekennzeichnet dadurch, dass** während des Aufblasens und der Entfaltung des Kissens ausgehend von einem gefalteten Zustand des Kissens der Körperabschnitt mindestens den niedrigsten Scheitelpunkt des Aufnahmeraums überlagern kann.

4. Airbag nach einem der Ansprüche 1 bis 3, **gekennzeichnet dadurch, dass** in dem aufgeblasenen und entfalteten Zustand des Kissens der Hals einen kreisförmigen oder elliptischen Querschnitt oder einen gebogenen viereckigen Querschnitt aufweist.

5. Airbag nach einem der Ansprüche 1 bis 4, **gekennzeichnet dadurch, dass** in einem Endbereich des Halses angrenzend zu dem Körperabschnitt ein flexibles Zugelement im Inneren des Halses (11) vorgesehen ist, wobei das Zugelement dazu konfiguriert ist, eine Querschnittsform des Halses in dem aufgeblasenen und entfalteten Zustand des Kissens zu begrenzen.

6. Airbag nach Anspruch 5, **gekennzeichnet dadurch, dass** das Zugelement ein Zugband ist, das dazu konfiguriert ist, in dem aufgeblasenen und entfalteten Zustand des Kissens glatt gezogen zu sein.

7. Airbag nach Anspruch 6, **gekennzeichnet dadurch, dass** in dem aufgeblasenen und entfalteten Zustand des Kissens das Zugband sich in einer vertikalen Ebene in dem Hals erstreckt und in dem Hals zentral in der horizontalen Richtung angeordnet ist.

8. Airbag nach einem der Ansprüche 1 bis 7, **gekennzeichnet dadurch, dass** die Führungshülse einen Verlauf aufweist, der dem des Halses in dem aufgeblasenen und entfalteten Zustand entspricht.

9. Airbag nach einem der Ansprüche 1 bis 8, **gekennzeichnet dadurch, dass** die Führungshülse in dem aufgeblasenen und entfalteten Zustand des Kissens an dem Hals angebracht ist.

10. Airbag nach einem der Ansprüche 1 bis 9, **gekennzeichnet dadurch, dass** die Führungsvorrichtung mindestens eine Z-Faltung beinhaltet.

11. Airbag nach einem der Ansprüche 1 bis 10, **gekennzeichnet dadurch, dass** die Führungsvorrichtung aus einer Bahn ausgebildet ist, die in der Hälfte gefaltet ist und dann auf beiden Seiten zu einem zylindrischen Körper vernäht ist; oder

   dass die Führungsvorrichtung aus zwei Bahnen ausgebildet ist, wobei eine der Bahnen an ihren Längskanten vernäht ist, um einen zylindrischen Körper auszubilden, der an zwei Enden offen ist, und die andere Bahn mit dem zylindrischen Körper vernäht ist, um einen Boden des zylindrischen Körpers an einem der beiden Enden des zylindrischen Körpers auszubilden; oder
   dass die Führungsvorrichtung aus zwei seitlichen Bahnen und einer dazwischenliegenden Hauptbahn ausgebildet ist, wobei die seitlichen Bahnen mit jeweils einer Seitenkante der dazwischenliegenden Hauptbahn vernäht sind, um einen zylindrischen Körper auszubilden, und jede seitliche Bahn einen Seitenabschnitt des zylindrischen Körpers ausbildet, und die dazwischenliegende Hauptbahn die anderen zwei gegenüberliegenden Seitenabschnitte und einen Boden des zylindrischen Körpers ausbildet.

12. Airbag nach Anspruch 11, **gekennzeichnet dadurch, dass** Zugbänder jeweils an Innenseiten der zwei von der dazwischenliegenden Hauptbahn ausgebildeten Seitenabschnitte vorgesehen sind.

13. Airbag nach einem der Ansprüche 1 bis 12, **gekennzeichnet dadurch, dass** das Kissen in dem gefalteten Zustand mehrfache Z-Faltungen mindestens in dem Hals, insbesondere in dem Hals und mindestens in einem zu dem Hals angrenzenden Bereich des Körperabschnitts, beinhaltet.

14. Anordnung für ein Fahrzeug, umfassend ein Fahrzeugbauteil, **gekennzeichnet dadurch, dass** die Anordnung den an dem Fahrzeugbauteil befestigten Airbag nach einem der Ansprüche 1 bis 13 umfasst.

15. Anordnung für ein Fahrzeug nach Anspruch 14, **gekennzeichnet dadurch, dass** ein Objekt an dem Fahrzeugbauteil vor dem Kissen in einer Auswurfrichtung des Kissens vorgesehen ist, wobei sich das Objekt in dem Aufnahmeraum befindet, der von dem Kissen in dem aufgeblasenen und entfalteten Zustand des Kissens ausgebildet ist, und der Körperabschnitt des Kissens während des Aufblasens und der Entfaltung des Kissens ausgehend von dem gefalteten Zustand des Kissens das Objekt überlagert.

16. Anordnung für ein Fahrzeug nach Anspruch 14 oder 15, **gekennzeichnet dadurch, dass** der Airbag ein Beifahrer-Airbag ist, das Fahrzeugbauteil eine Instrumententafel (4) ist und das Objekt ein Anzeigebildschirm, insbesondere ein schwebender zentraler Steuerbildschirm (1), ist, der auf der Instrumententafel angeordnet ist und nach oben aus der Instrumententafel herausragt.

**Revendications**

1. Airbag, en particulier un airbag pour passager avant, comprenant un coussin (2), dans lequel le coussin a un col (11) et une partie principale (12), dans lequel le coussin peut être rempli de gaz depuis le col, dans lequel le coussin est configuré de manière à ce que,

   un espace de réception (13) soit formé entre le col et la partie principale et traverse le coussin transversalement dans un état gonflé et déployé du coussin, en particulier dans lequel l'espace de réception traverse le coussin dans une direction horizontale transversale à une direction d'éjection du coussin,
   dans lequel l'airbag comprend un dispositif de guidage (10) configuré pour guider le coussin pendant le gonflage et le déploiement du coussin,
   **caractérisé en ce que** le dispositif de guidage est pliable de manière flexible, dans lequel le coussin plié est logé dans le dispositif de guidage plié, dans lequel le dispositif de guidage peut être transformé d'un état plié en un état déployé où le dispositif de guidage forme une gaine de guidage.

2. Airbag selon la revendication 1, **caractérisé en ce que**, pendant le gonflage et le déploiement du coussin à partir d'un état plié du coussin, la partie principale peut au moins franchir une ligne imaginaire, qui s'étend dans la direction horizontale à une hauteur prédéterminée dans l'espace de réception, de préférence dans laquelle le sommet le plus bas de l'espace de réception a une distance n'excédant pas 50 mm, en particulier n'excédant pas 20 mm, à partir de la ligne imaginaire.

3. Airbag selon la revendication 1, **caractérisé en ce que** pendant le gonflage et le déploiement du coussin à partir de l'état plié du coussin, la partie principale peut au moins franchir le sommet le plus bas de l'espace de réception.

4. Airbag selon l'une quelconque des revendications 1 à 3, **caractérisé en ce que** dans l'état gonflé et déployé du coussin, le col a une section transversale circulaire ou elliptique, ou une section transversale quadrilatérale incurvée.

5. Airbag selon l'une quelconque des revendications 1 à 4, **caractérisé en ce qu'**à une zone terminale du col adjacente à la partie principale, un élément de traction flexible est prévu à l'intérieur du col (11), dans lequel l'élément de traction est configuré pour maintenir une forme de section transversale du col dans l'état gonflé et déployé du coussin.

6. Airbag selon la revendication 5, **caractérisé en ce que** l'élément de traction est une sangle de traction configurée pour être redressée dans l'état gonflé et déployé du coussin.

7. Airbag selon la revendication 6, **caractérisé en ce que** dans l'état gonflé et déployé du coussin, la sangle de traction s'étend dans un plan vertical dans le col et est disposée dans le col de manière centrale dans la direction horizontale.

8. Airbag selon l'une quelconque des revendications 1 à 7, **caractérisé en ce que** la gaine de guidage a un parcours conforme à celui du col dans l'état gonflé et déployé.

9. Airbag selon l'une quelconque des revendications 1 à 8, **caractérisé en ce que** la gaine de guidage est fixée sur le col dans l'état gonflé et déployé du coussin.

10. Airbag selon l'une quelconque des revendications 1 à 9, **caractérisé en ce que** le dispositif de guidage comporte au moins un pli en Z.

11. Airbag selon l'une quelconque des revendications 1 à 10, **caractérisé en ce que** le dispositif de guidage est formé d'une membrane qui est pliée en deux et ensuite cousue sur les deux côtés en un corps cylindrique ; ou

  **en ce que** le dispositif de guidage est formé de deux membranes, dans lequel une des membranes est cousue sur ses bords longitudinaux pour former un corps cylindrique qui est ouvert aux deux extrémités, et l'autre membrane est cousue avec le corps cylindrique pour former un fond du corps cylindrique à l'une des deux extrémités du corps cylindrique ; ou
  **en ce que** le dispositif de guidage est formé de deux membranes latérales et d'une membrane principale intermédiaire, dans lequel les membranes latérales sont cousues avec un bord de côté respectif de la membrane principale intermédiaire pour former un corps cylindrique, et chaque membrane latérale forme une partie latérale du corps cylindrique, et la membrane principale intermédiaire forme les deux autres parties opposées et un fond du corps cylindrique.

12. Airbag selon la revendication 11, **caractérisé en ce que** des sangles de traction sont respectivement prévues sur des côtés intérieurs des deux parties latérales formées par la membrane principale intermédiaire.

13. Airbag selon l'une quelconque des revendications 1 à 12, **caractérisé en ce que** le coussin dans l'état plié comporte plusieurs plis en Z, au moins dans le col, en particulier dans le col et au moins dans une section de la partie principale adjacente au col.

14. Agencement pour un véhicule, comprenant un composant de véhicule, **caractérisé en ce que** l'agencement comprend l'airbag selon l'une quelconque des revendications 1 à 13 monté sur le composant de véhicule.

15. Agencement pour un véhicule selon la revendication 14, **caractérisé en ce qu'**un objet est prévu sur le composant de véhicule devant le coussin dans une direction d'éjection du coussin, dans lequel l'objet est situé dans l'espace de réception formé par le coussin dans l'état gonflé et déployé du coussin, et la partie principale du coussin franchit l'objet pendant le gonflage et le déploiement du coussin à partir de l'état plié du coussin.

16. Agencement pour un véhicule selon la revendication 14 ou 15, **caractérisé en ce que** l'airbag est un airbag pour passager avant, le composant de véhicule est un tableau de bord (4), et l'objet est un écran d'affichage, en particulier un écran de contrôle central flottant (1), disposé sur le tableau de bord et dépassant vers le haut depuis le tableau de bord.

Fig. 1

F i g. 2

L2

2a, 2b

F i g. 3

Fig.4

Fig. 5

Fig. 6

Fig. 7

Fig. 8

26

25 27

Fig. 9

28

29 25

Fig. 10

28  29  32

31

Fig. 11

3

4

1

2

Fig. 12

Fig. 13

Fig. 14

Fig. 15

EP 4 214 094 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102016219071 A1